# EUROPEAN PATENT SPECIFICATION

(11) **EP 2 564 736 B1**
(45) Date of publication and mention of the grant of the patent: **19.02.2014**
(21) Application number: 11425228.1
(22) Date of filing: 29.08.2011
(51) Int. Cl.: A47J 31/36

(54) **Manual capsules automatic charge and ejection system, to be used in espresso machines and the like**
Manuelles System zum automatischen Laden und Auswerfen von Kapseln, zur Anwendung in Espressomaschinen und dergleichen
Système automatique manuel de chargement et éjection de capsules, à appliquer aux machines expresso et similaires

(43) Date of publication of application: 06.03.2013
(73) Proprietor: Spinel S.R.L., 73052 Parabita (Lecce) (IT)
(72) Inventor: Spinelli, Giovanni, 73052 Parabita (LE) (IT)
(74) Representative: Bruni, Giovanni

(56) References cited:
- EP-A2- 1 172 055
- WO-A2-2010/134054

## Description

Object of the present invention is an improvement of the capsule (FAP) coffee unit, which is going to be provided on the espresso machines yet patented by the writer. The invention relates to a new manual closing and opening mechanism with capsules (FAP) automatic charge and rear ejection, to be applied to espresso machines and the like.

It is known at the state of the art that the espresso machines with capsules (FAP) designed and patented by the writing company are provided with an unit which in the manual closing step, charges the capsule (FAP) inside the coffee unit and in the manual opening step discharges the capsule automatically, but from the lower side of the unit. Such system, for example, is not adapted for using 14 g capsules (FAP), which currently are available on the market.

Moreover, the above mentioned manual charging system of capsules (FAP) in the coffee unit and their respective automatic lower ejection, even maintaining all the advantages and the innovative aspects described in the previous patents, cannot be used on espresso machine models, where, for design or function needs, a free and accessible area underlying the coffee brewing unit is provided.

An example where it is not possible to use the lower automatic ejection unit of the capsule (FAP) occurs when for design and function needs, the lower positioning of the cup is provided exactly in axis and under the brewing point of the capsule (FAP).

Document WO-A-2010/134054 discloses a manual closing and opening mechanical system according to the preamble of independent claim 1. Object of the present invention is therefore to solve the previously described technical problems by adopting a new manual closing and opening system of the coffee unit with capsules (FAP) automatic charge and rear ejection, such that it can be used on espresso machines where a free and accessible area is provided exactly under the coffee brewing unit. The use of the new capsules (FAP) rear ejection system allows the coffee outlet spout to be positioned even in lower position and in axis to the coffee brewing unit and the consequent espresso outlet in the cup arranged there-under and in axis to the coffee brewing unit.

Another object of the invention is to guarantee a new manual charging and closing system of the capsules (FAP) with rear automatic ejection which can be used also with the new 14 g capsules in order to provide two espresso shots contemporarily from a double outlet spout.

The present invention solves the above cited aims as it is a mechanical manual closing and opening system of the coffee unit with capsules automatic charge and rear ejection for espresso machines according to independent claim 1.

The above described aims and their consequent advantages as well as the features of the present invention will be clearer from the following detailed description of some embodiments, reported as a way of not limiting example with reference to the appended drawings 1/9 to 9/9. In the figures:
- figs. 1a and 1b show the closing and opening system of the coffee unit with automatic charge and ejection, respectively in opening and closing position, in a top view;
- figs. 2a and 2b show the relative coffee unit provided with the new ejection system with the consequent positioning of the outlet spout, respectively in lower position and in axis with respect to the same coffee unit, in a section view;
- figs. 3a and 3b show the new charging system usable with the 14 g capsules, in an axonometric view;
- figs. 4a and 4b show a detail of the mechanical portion of the new manual charging and closing system of the capsule (FAP) with rear automatic ejection, respectively in opening position and closing position, in an axonometric view;
- figs. 5a and 5b show the manual closing step of the unit according to the present invention in a capsule espresso machine, in a front and plan view respectively;
- figs. 6a and 6b show the automatic charging step of the capsule with the unit closing, in a front view of the unit;
- figs. 7a and 7b show the rear ejection step of the exhausted capsule, which occurs contemporarily to the automatic charging step of the capsule;
- figs. 8a and 8b show the automatic extraction step of the capsule after the manual opening of the unit according to the invention, in a capsule espresso machine;
- figs. 9a, 9b, 9c, 9d, 9e and 9f show schematically and briefly all the steps of the new manual closing and opening system of the unit with capsules (FAP) rear automatic charge and ejection according to the invention.

An absolutely not limiting embodiment of the present invention is the implementation of the new manual closing and opening system of the coffee unit with capsules rear automatic charge and ejection in a common capsules FAP espresso machine, which is referred to in the following figures; said system being mainly made up of the following elements: a fixed fap-holder tray 1, a rotating fap-holder tray 2, a claw 3, a pin for claw 4, a spring for claw 5, an extractor 6, two extractor springs 7, an unit closing sensor 8 and a coffee outlet spout 9.

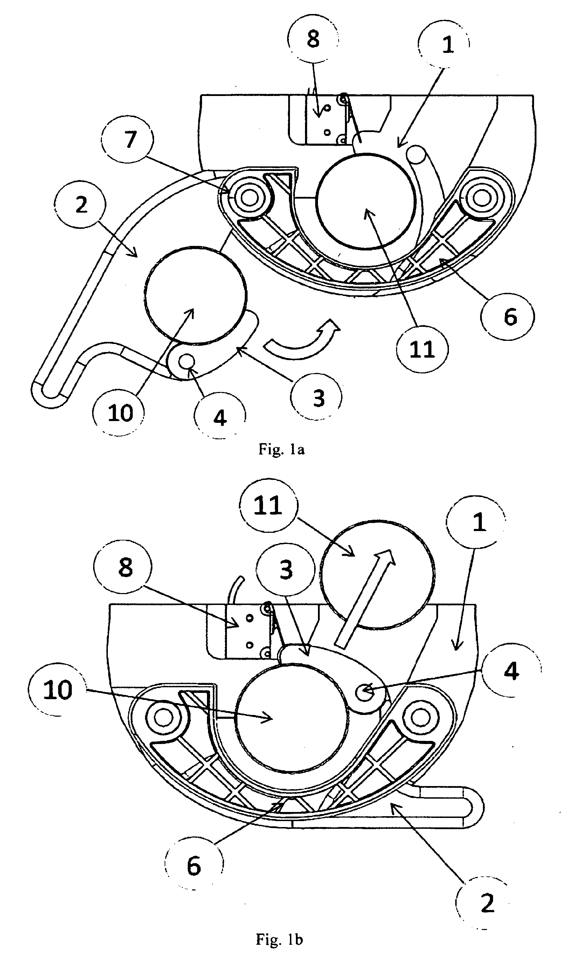

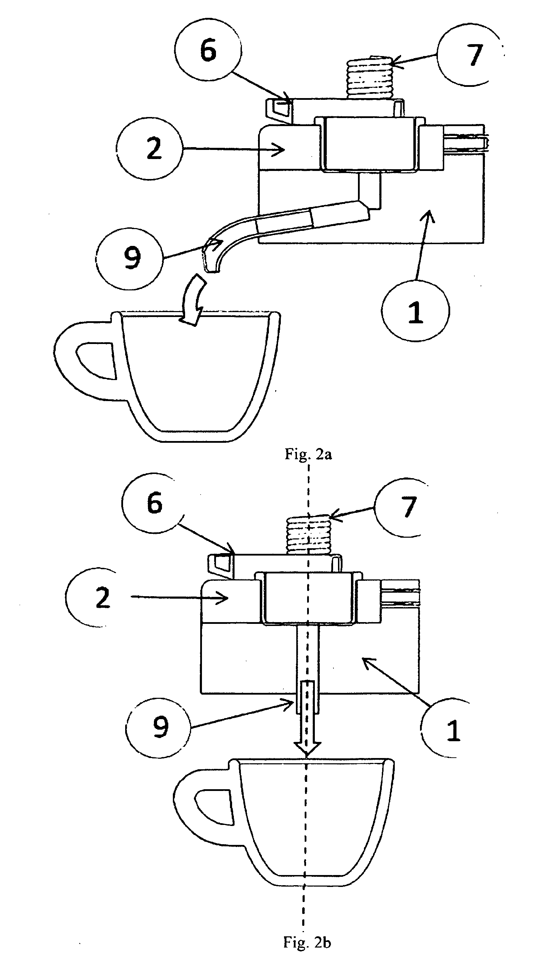

As it is shown in figs. 1 a and 1b, when manually closing the unit, the system allows both the automatic charge of a capsule 10 and the rear ejection of the previously used exhausted capsule 11 at the same time. In figs. 2a and 2b instead it is observed that the rear discharge of the capsule (FAP) allows the coffee outlet spout 9 to be positioned even in lower position or in axis to the coffee brewing unit with the consequent espresso outlet in the cup arranged there-under (fig. 2a) or in axis to the coffee brewing unit (fig. 2b).

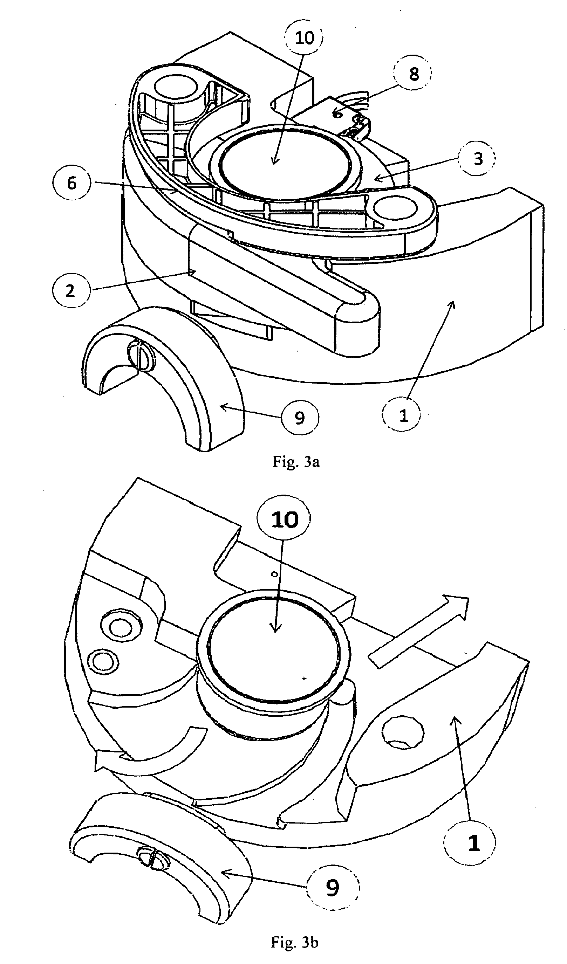

As it is shown in figs. 3a and 3b, the particular shape of the new inventive unit allows the 14 g dose ground coffee capsules 10 to be used. In fact, the point on which the espresso brewing occurs from the capsule on the fixed fap-holder tray 1 is designed such that it constitutes a solid and uniform support base. In the previous solutions known at the state of the art, the support base opens to let the exhausted capsule fall there-under, exactly in the point where the espresso brewing from the capsule occurs. In this step the forces and the pressure generating during the espresso coffee extraction from a 14 g dose capsule are so high that the unit base surface would collapse and deform according to the known solutions.

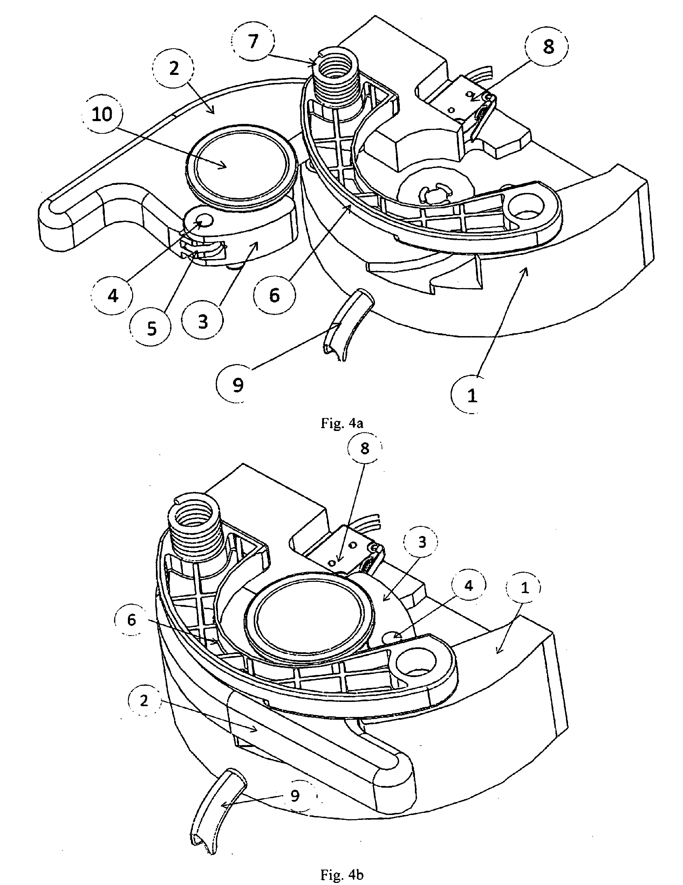

Figures 4a and 4b show the mechanical portion of the manual closing and opening system of the coffee brewing unit with capsules (FAP) automatic charge and rear ejection together with its main elements in opening position and closing position, receptively. As yet previously stated, the main elements are: a fixed fap-holder tray 1, a rotating fap-holder tray 2 (in opening position in fig. 4a and in closing position in fig. 4b), a claw 3, a pin for claw 4, a spring for claw 5, an extractor 6, two extractor springs 7, an unit closing sensor 8, a coffee outlet spout 9.

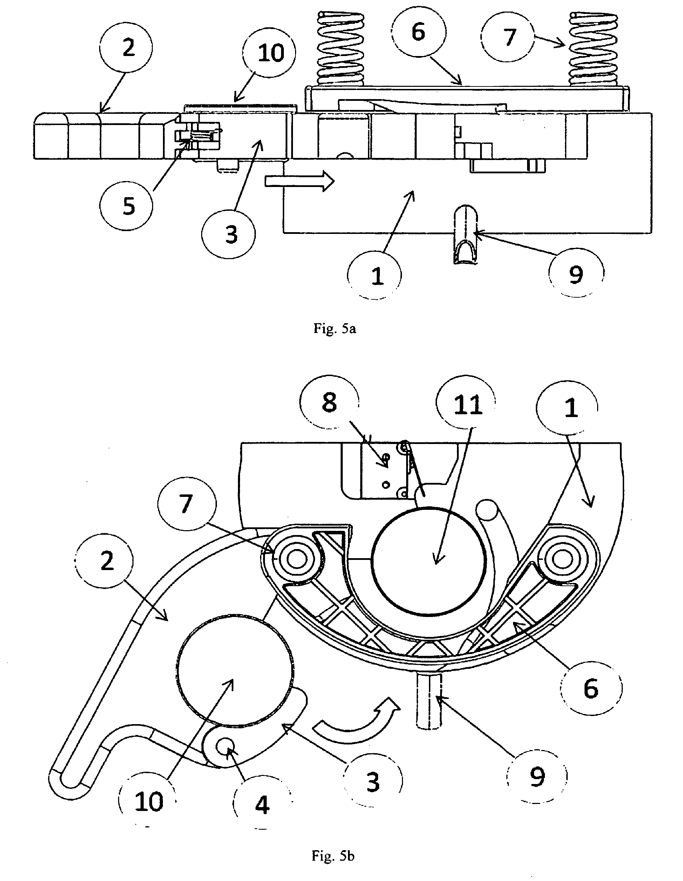

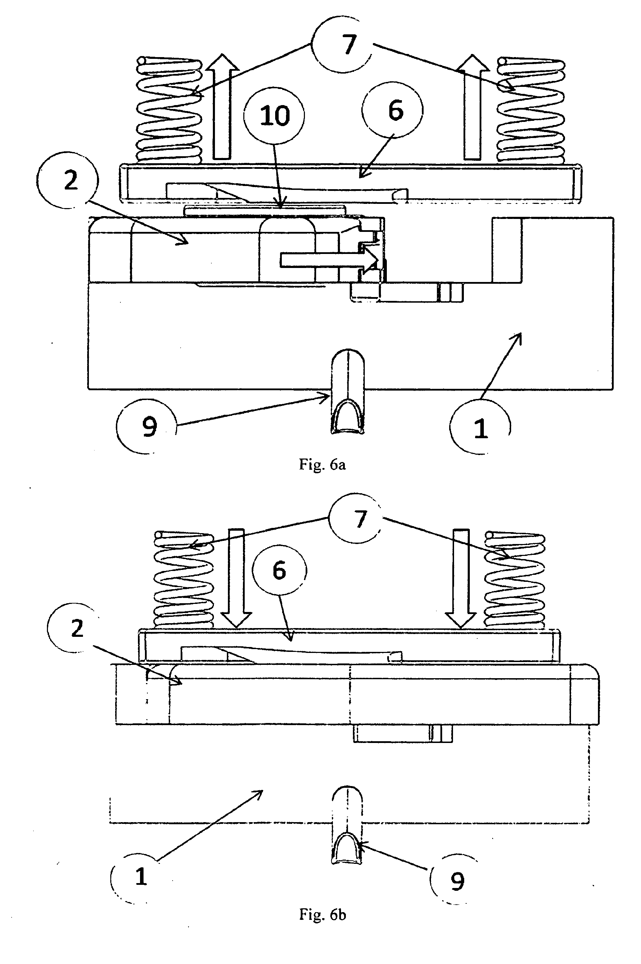

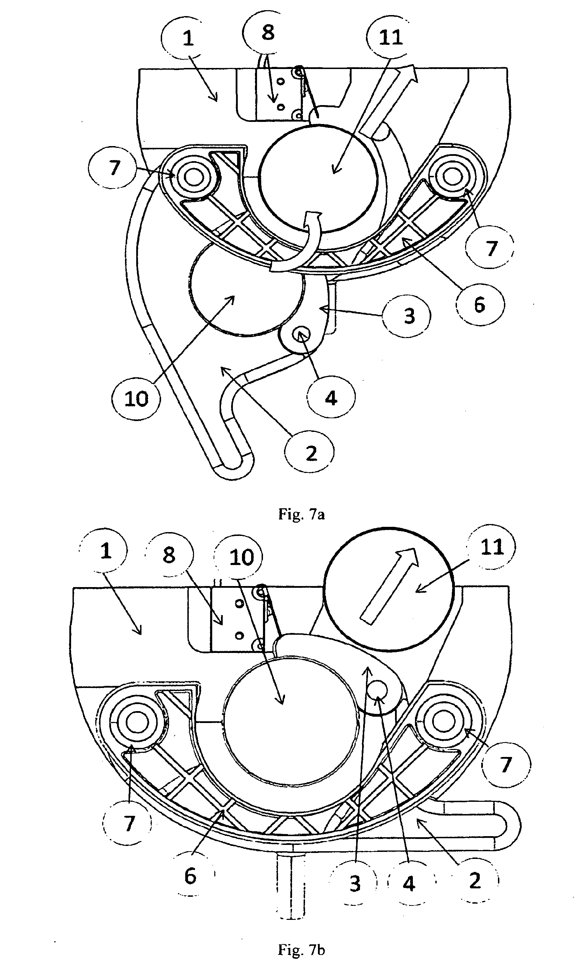

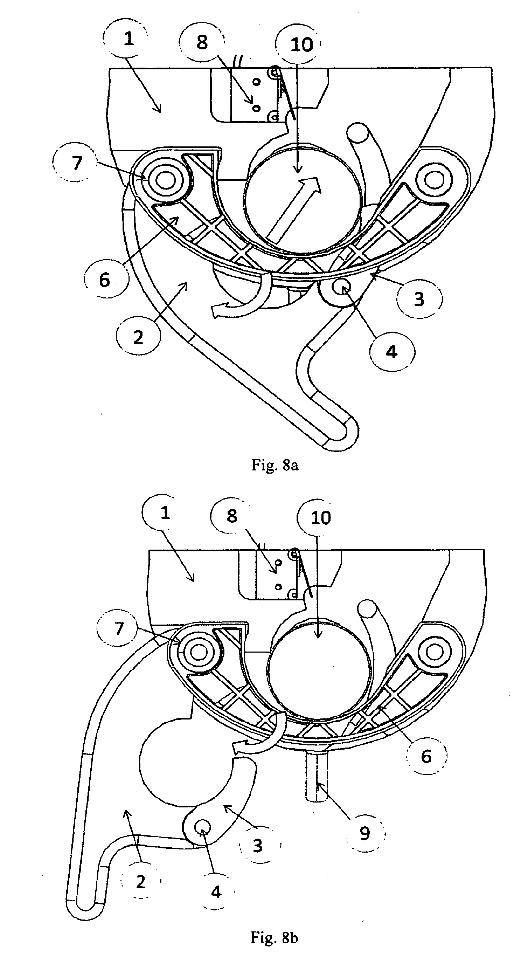

The functioning principle of the implemented system in a capsules (FAP) espresso machine is schematized in figs. 5a-5b to 8a-8b and it can be structured synthetically in four steps:
➢ manual charging the capsule on the rotating tray (figs. 5a and 5b);
➢ manual closing the unit (figs. 6a and 6b);
➢ rear automatic ejecting the exhausted capsule (figs. 7a and 7b);
➢ manual opening the unit with automatic extraction of the capsule (figs. 8a and 8b).

Referring to said figures, to charge an espresso capsule inside the unit, it is needed to place manually the new capsule 10 on the rotating fap-holder tray 2. As it is shown in figs. 5a-5b, the capsule 10 remains blocked in the suitable seat of the claw 3, which, constrained to the rotating tray by the pin 4, tends to remain in closing position, under the effect of a spring 5.

Fig. 6a shows the manual closing step of the unit where the rotating fap-holder tray 2 is rotated freely until the capsule 10 comes in contact with the extractor 6. Now, it is needed a higher closing force to be applied as the same capsule 10, by sliding on the outer inclined surface of the extractor 6, pushes it upwards.

The further rotation of the rotating fap-holder tray 2 brings the capsule 10 in central position inside the unit with the consequent return of the extractor 6 downwards, under the effect of a couple of springs 7 (fig. 6b).

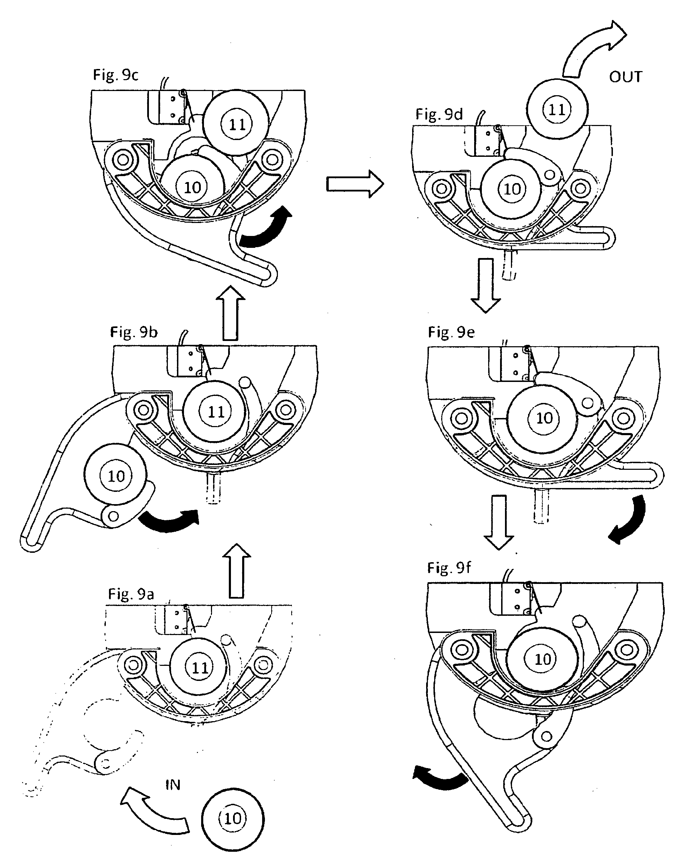

The rear automatic ejection step of the capsule occurs contemporarily to the unit closing step, as it is shown in figs. 7a and 7b. When the new capsule 10, blocked by the claw 3, enters the brewing unit, the exhausted capsule 11, arranged on the fixed fap-holder tray 1, is automatically ejected. The rear ejection is caused by the claw 3 which pushes the exhausted capsule 11 rearwards thus making it fall downwards away from the central axis of the coffee brewing unit. After the espresso brewing, the capsule 10 remains inside the unit until the following re-opening. In the following manual re-opening step of the unit, the rotating fap-holder tray 2 tends to rotate pushing the capsule 10 against the inner perpendicular surface of the extractor 6, which prevents the capsule 10 from moving outwards. In order to open definitely the rotating fap-holder tray 2 and to extract automatically the capsule 10 retained by the extractor 6, it is needed to apply a force such that the claw 3 is opened. In the moment in which the claw 3 opens, the capsule 10 is released inside the unit, the spring for claw 5 closes the claw 3 again and the unit is ready for the manual charge of a new capsule. Figures 9a to 9f summarize in a unique scheme all the just described steps of the new manual closing and opening system of the coffee unit with capsules (FAP) automatic charge and rear ejection which can be applied to espresso machines and the like.

## Claims

1. Manual closing and opening mechanical system of a coffee unit with capsules or FAP automatic charge and rear ejection for espresso machines comprising a fixed fap-holder tray (1), a fap-holder tray (2), coupling means for the capsule (3, 4 and 5), an extractor (6), at least a spring element (7) associated to the extractor (6), an unit closing sensor (8), a coffee outlet, spout (9), characterized said fap-holder tray is a rotating fap-holder tray, and in that said coupling means for the capsule consists of a
claw (3) constrained to said rotating tray (2) by a pin (4) and charged by at least a spring element (5), said claw (3) causing the rear automatic ejection of the exhausted capsules (11) occurs contemporarily to the unit closing, when a new capsule (10) in introduced in the brewing unit, wherein the claw pushes the exhausted capsule rearwards.

2. Manual closing and opening mechanical system of the coffee unit with capsules or FAP rear automatic charge and ejection for espresso machines according to claim 1, **characterized in that** the capsule (FAP) extraction system is made up of an extractor (6) which, in the unit manual closing step, allows the capsule (10) to slide inside the unit so that the same capsule, by sliding on the inclined outer surface of the extractor (6), pushes it upwards, to return then downwards under the effect of at least a spring element (7).

3. Manual closing and opening mechanical system of the coffee unit with capsules or FAP rear automatic charge and ejection for espresso machines according to the claims **1 and 2**, **characterized in that** said extractor (6), in the unit manual opening step, prevents the capsule (10) from sliding as it is retained by the inner perpendicular surface of the extractor which blocks its stroke outwards.

4. Manual closing and opening mechanical system of the coffee unit with capsules or FAP rear automatic charge and ejection for espresso machines according to any one of the preceding claims, **characterized in that** it is usable on capsules espresso machines wherein it is needed that the area underlying the brewing unit is free and accessible to allow the coffee outlet spout (9) to be positioned even in lower position and in axis to the coffee brewing unit.

5. Manual closing and opening mechanical system of the coffee unit with capsules or FAP rear automatic charge and ejection for espresso machines according to any one of the preceding claims, **characterized in that** it is usable also with 14 g dose ground coffee capsules (10).

## Patentansprüche

1. Handbetätigtes mechanisches Schließ- und Öffnungssystem einer Kaffeeeinheit mit automatischem Laden und rückseitigem Auswerfen von Kapseln oder FAP für Espressomaschinen, das einen festen FAP-Halteeinsatz (1), einen FAP-Halteeinsatz (2), ein Kopplungsmittel für die Kapsel (3, 4 und 5), einen Auswerfer (6), mindestens ein mit dem Auswerfer (6) verbundenes Federelement (7), einen Schließsensor (8) der Einheit und eine Kaffeeausgusstülle (9) umfasst, **dadurch gekennzeichnet, dass** der FAP-Halteeinsatz ein drehender FAP-Halteeinsatz ist, und dadurch, dass das Kopplungsmittel für die Kapsel aus einer Klaue (3) besteht, die an dem drehenden Einsatz (2) mit einem Bolzen (4) befestigt ist und von mindestens einem Federelement (5) belastet wird, wobei das Bewirken des automatischen rückseitigen Auswurfs der leeren Kapseln (11) durch diese Klaue (3) gleichzeitig mit dem Schließen der Einheit erfolgt, wenn eine neue Kapsel (10) in die Brüheinheit eingesetzt wird, wobei die Klaue die leere Kapsel nach hinten schiebt.

2. Handbetätigtes mechanisches Schließ- und Öffnungssystem der Kaffeeeinheit mit automatischem Laden und rückseitigem Auswerfen von Kapseln oder FAP für Espressomaschinen nach Anspruch 1, **dadurch gekennzeichnet, dass** das System für den Auswurf der Kapsel (FAP) aus einem Auswerfer (6) besteht, der es der Kapsel (10) beim Schritt des manuellen Schließens der Einheit ermöglicht, in die Einheit zu gleiten, so dass diese selbe Kapsel durch das Gleiten auf der schrägen Außenfläche des Auswerfers (6) ihn nach oben drückt, um dann unter der Wirkung von mindestens einem Federelement (7) wieder nach unten zurückzukehren.

3. Handbetätigtes mechanisches Schließ- und Öffnungssystem der Kaffeeeinheit mit automatischem Laden und rückseitigem Auswerfen von Kapseln oder FAP für Espressomaschinen nach den Ansprüchen 1 und 2, **dadurch gekennzeichnet, dass** der Auswerfer (6) beim Schritt des manuellen Öffnens der Einheit die Kapsel (10) am Gleiten hindert, da sie von der inneren perpendikulären Fläche des Auswerfers Zurückgehalten wird, die ihren Stoß nach außen verhindert.

4. Handbetätigtes mechanisches Schließ- und Öffnungssystem der Kaffeeeinheit mit automatischem Laden und rückseitigem Auswerfen von Kapseln oder FAP für Espressomaschinen nach einem der vorhergehenden Ansprüche, **dadurch gekennzeichnet, dass** es in Kapsel-Espressomaschinen verwendet werden kann, wobei es erforderlich ist, dass der Bereich unter der Brüheinheit frei und zugänglich ist, um die Positionierung der Kaffeeausgusstülle (9) auch in einer unteren Stellung und in Linie mit der Kaffeebrüheinheit zu ermöglichen.

5. Handbetätigtes mechanisches Schließ- und Öffnungssystem der Kaffeeeinheit mit automatischem Laden und rückseitigem Auswerfen von Kapseln oder FAP für Espressomaschinen nach einem der vorhergehenden Ansprüche, **dadurch gekennzeichnet, dass** es auch mit Kapseln (10) mit 14-g-Portionen gemahlenen Kaffees verwendet werden kann.

## Revendications

1. Système mécanique de fermeture et d'ouverture manuelles d'un groupe café avec chargement et éjection postérieure aromatique de capsules ou filtres à jeter (FAP) pour machines à expresso comprenant un plateau porte-filtre à jeter fixe (1), un plateau porte-filtre à jeter (2), des moyens d'accouplement pour la capsule (3, 4 et 5), un extracteur (6), au moins un élément de ressort (7) associé à l'extracteur (6), un capteur de fermeture de groupe (8), un bec de sortie du café (9), **caractérisé en ce que** ledit plateau porte-filtre à jeter est un plateau porte-filtre à jeter rotatif et lesdits moyens d'accouplement pour la capsule consistent en une griffe (3) liée audit plateau rotatif (2) par une broche (4) et chargée par au moins un élément à ressort (5), ladite griffe (3) faisant en sorte que l'éjection automatique postérieure des capsules vidées (11) se produise simultanément à la fermeture du groupe quand une nouvelle capsule (10) est introduite dans l'unité de chauffage, dans lequel la griffe pousse la capsule vidée vers l'arrière.

2. Système mécanique de fermeture et d'ouverture manuelles du groupe café avec chargement et éjection postérieure automatique de capsules ou filtres à jeter (FAP) pour machines à expresso selon la revendication 1, **caractérisé en ce que** le système d'extraction de capsule (FAP) est constitué d'un extracteur (6) qui, dans l'étape de fermeture manuelle du groupe, permet à la capsule (10) de glisser à l'intérieur du groupe de manière que cette même capsule, en glissant sur la surface extérieure inclinée de l'extracteur (6), la pousse vers le haut, pour revenir ensuite vers le bas sous l'effet d'au moins un élément à ressort (7).

3. Système mécanique de fermeture et d'ouverture manuelles du groupe café avec chargement et éjection postérieure automatique de capsules ou filtres à jeter (FAP) pour machines à expresso selon les revendications 1 et 2, **caractérisé en ce que** ledit extracteur (6), dans l'étape d'ouverture manuelle du groupe, empêche la capsule (10) de glisser alors qu'elle est retenue par la surface perpendiculaire intérieure de l'extracteur qui bloque sa course vers l'extérieur.

4. Système mécanique de fermeture et d'ouverture manuelles du groupe café avec chargement et éjection postérieure automatique de capsules ou filtres à jeter (FAP) pour machines à expresso selon l'une quelconque des revendications précédentes, **caractérisé en ce qu'**il est utilisable sur des machines à expresso pour capsules dans lesquelles il est nécessaire que la zone située au-dessous de l'unité de chauffage soit libre et accessible pour permettre au bec de sortie du café (9) d'être positionné même en position inférieure et dans l'axe de l'unité de chauffage du café.

5. Système mécanique de fermeture et d'ouverture manuelles du groupe café avec chargement et éjection postérieure automatique de capsules ou filtres à jeter (FAP) pour machines à expresso selon l'une quelconque des revendications précédentes, **caractérisé en ce qu'**il est également utilisable avec des capsules de café moulu en dose de 14 g (10).
